# FASCICULE DE BREVET EUROPEEN

(11) **EP 2 115 656 B1**
(45) Date de publication et mention de la délivrance du brevet: **05.01.2011**
(21) Numéro de dépôt: 08717183.1
(22) Date de dépôt: 27.02.2008
(51) Int. Cl.: G06F 21/02, G06F 21/24

(54) **PROCEDE DE MODIFICATION DE SECRETS COMPRIS DANS UN MODULE CRYPTOGRAPHIQUE, NOTAMMENT EN MILIEU NON PROTEGE**
VERFAHREN ZUR GEHEIMNISÄNDERUNG IN EINEM KRYPTOGRAFISCHEN MODUL, VOR ALLEM IN EINER UNGESCHÜTZTEN UMGEBUNG
METHOD FOR MODIFYING SECRETS IN A CRYPTOGRAPHIC MODULE, PARTICULARLY IN A NON-PROTECTED ENVIRONMENT

(30) Priorité: 06.03.2007 FR 0701625
(43) Date de publication de la demande: 11.11.2009
(73) Titulaire: THALES, 92200 Neuilly-sur-Seine (FR)
(72) Inventeur: D'ATHIS, Thierry, 91800 Brunoy (FR); DAILLY, Philippe, F-91580 Etrechy (FR); RATIER, Denis, F-91210 Draveil (FR)
(74) Mandataire: Lucas, Laurent Jacques
(86) Numéro de dépôt international: PCT/EP2008/052376
(87) Numéro de publication internationale: WO 2008/107351

(56) Documents cités:
- EP-A- 1 688 843

## Description

L'invention concerne un procédé de modification d'un ensemble de secrets compris dans un module cryptographique. En particulier, l'invention s'applique au rechargement en milieu non protégé de clés d'accès comprises dans un ensemble de cartes à puce.

Dans un système comportant un ensemble de modules cryptographiques (par exemple des cartes à puces comportant des secrets cryptographiques), la gestion des secrets compris dans lesdits modules est une tâche complexe. En particulier, l'opération de mise à jour des secrets, doit répondre à un certain nombre d'exigences de sécurité. Aussi, il est courant que les secrets soient mis à jour en milieu sécurisé, c'est-à-dire généralement dans un local sécurisé, hors du contexte d'exploitation des modules cryptographiques. Lorsque le nombre de modules cryptographiques est important, cette opération de maintenance est lourde et coûteuse.

En outre, afin de garantir un niveau de sécurité correct, les modules cryptographiques ne permettent pas d'accéder en lecture et en écriture aux secrets. En cas de défaillance du processus de mise à jour des secrets, par exemple suite à une interruption involontaire du processus, il n'est pas possible de reprendre et achever le processus à l'endroit même où celui-ci a connu une telle défaillance.

L'invention a notamment pour but de remédier aux inconvénients précités. A cet effet, l'invention a pour objet un procédé de modification de secrets compris dans un module cryptographique. Le module cryptographique garantit que le chargement d'un secret est soit abouti, soit non avenu. Le module cryptographique permet la lecture d'un numéro de version pour chaque secret. Le module cryptographique comporte une information indiquant un numéro de version correspondant à l'ensemble des secrets. Le procédé selon l'invention comporte notamment une première étape au cours de laquelle, si le numéro de version de l'ensemble des secrets est égal à un numéro de version nécessitant le chargement d'un ensemble de nouveaux secrets, le numéro de version de l'ensemble des secrets du module cryptographique est rendu égal à un numéro distinctif permettant de déterminer que le module cryptographique est en cours de rechargement. Le procédé selon l'invention comporte une deuxième étape au cours de laquelle, pour chaque secret, si le numéro de version dudit secret différent du numéro de version du nouveau secret correspondant à charger, le nouveau secret et son numéro de version sont chargés. Le procédé selon l'invention comporte une troisième étape au cours de laquelle le numéro de version de l'ensemble des secrets du module cryptographique est rendu égal au numéro de version de l'ensemble des nouveaux secrets.

Dans un mode de réalisation, le numéro de version de l'ensemble des secrets du module cryptographique sur la carte est enregistré dans un fichier du module cryptographique de la carte accessible via un secret immuable.

Dans un autre mode de réalisation, le numéro de version de l'ensemble des secrets du module cryptographique sur la carte est enregistré sous la forme d'un secret utilisé seulement pour indiquer la version globale des secrets.

Dans un autre mode de réalisation, le numéro de version de l'ensemble des secrets du module cryptographique sur la carte est enregistré sous la forme du dernier des secrets à recharger à la deuxième étape.

Au cours de la deuxième étape, la vérification du numéro de version de chaque secret peut notamment être réalisée par une authentification mutuelle des différents secrets jusqu'à trouver le point d'interruption.

L'invention a notamment pour avantages qu'elle permet de modifier un ensemble de secrets dans un module cryptographique de manière à en garantir la cohérence même lorsque la mise à jour ne peut se faire que secret par secret. L'invention permet de aussi garantir qu'après rechargement des secrets au sein du module cryptographique, les données déjà présentes dans le module cryptographique continueront à être accessibles et non corrompues. En outre, le procédé selon l'invention peut être interrompu à tout moment sans que cela n'entraîne de corruption des secrets compris dans le module cryptographique. De plus, après une ou plusieurs interruptions, volontaires ou accidentelles, au cours de la mise en oeuvre des étapes du procédé selon l'invention, le procédé peut encore être mis en oeuvre depuis la même machine ou depuis une machine différente apte à poursuivre la mise en oeuvre des étapes du procédé.

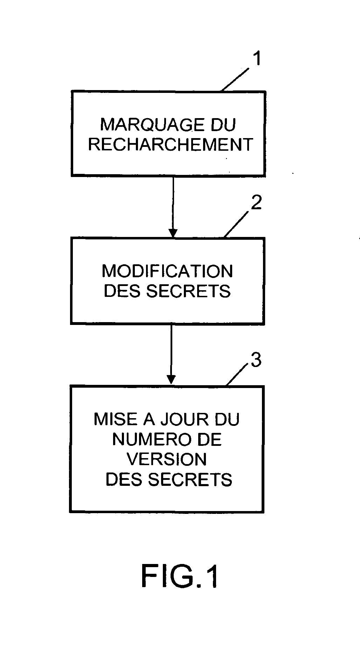

D'autres caractéristiques et avantages de l'invention apparaîtront à l'aide de la description qui suit faite en regard des dessins annexés qui représentent, figure 1, un synoptique des étapes du procédé selon l'invention de modification de secrets compris dans un module cryptographique.

Le procédé selon l'invention permet notamment de reprendre et achever la modification d'un ensemble de secrets (données sensibles assorties de leurs clés d'accès), lesdits secrets ne pouvant être relus, ni nécessairement réécris.

Dans le mode de réalisation du procédé selon l'invention, illustré par la figure 1, le module cryptographique comportant les secrets, manipulé au cours de la mise en oeuvre des étapes du procédé, a notamment les caractéristiques suivantes :
- garantie que le chargement d'un secret est soit abouti, soit non avenu (principe d'anti-arrachement aussi désigné par le terme anglo-saxon de principe « anti-tear ») ;
- mise à jour simultanée du secret et de sa version ;
- possibilité de lire un numéro de version pour chaque secret, ledit secret quant à lui n'étant pas accessible ;

Le module cryptographique comporte aussi une information indiquant un numéro de version correspondant à l'ensemble des secrets.

Un tel module cryptographique peut être par exemple une carte à puce, en particulier une carte « Mifare® DESFire ».

Le procédé selon l'invention reçoit en entrée un ensemble de nouveaux secrets à charger en lieu et place des secrets compris dans le module cryptographique. A l'ensemble de nouveaux secrets correspond un numéro de version correspondant à l'ensemble des nouveaux secrets. De même, à l'ensemble des secrets compris dans le module cryptographique, correspond un numéro de version. A chaque secret compris dans le module cryptographique correspond un numéro de version. A chaque nouveau secret à charger correspond un numéro de version. A chaque secret correspond donc un numéro de version. Si les numéros de version sont identiques alors cela implique que les secrets sont identiques. Il en va de même pour le numéro de version de l'ensemble des secrets.

Le procédé selon l'invention comporte une première étape 1 au cours de laquelle le module cryptographique est marqué comme étant en cours de rechargement de secrets. Ainsi, au cours de la première étape 1, après s'être assuré si nécessaire que le rechargement des secrets ait été demandé, le numéro de version de l'ensemble des secrets du module cryptographique est lu.

Puis, le numéro de version de l'ensemble des secrets du module cryptographique est comparé au numéro de version de l'ensemble des secrets à charger. Cette comparaison détermine s'il est nécessaire de charger les nouveaux secrets ( par exemple, le numéro de version de l'ensemble des secrets à charger est supérieur au numéro de version de l'ensemble des secrets déjà chargés ). Le cas échéant :
- le numéro de version de l'ensemble des secrets du module cryptographique est rendu égal à un numéro distinctif permettant de déterminer que le module cryptographique est en cours de rechargement ;
- puis, au cours d'une deuxième étape 2 du procédé selon l'invention, pour chaque secret, si le numéro de version dudit secret est différent du numéro de version du nouveau secret à charger, le nouveau secret correspondant est chargé ainsi que son numéro de version ;
- puis, au cours d'une troisième étape 3 du procédé selon l'invention, le numéro de version de l'ensemble des secrets du module cryptographique est rendu égal au numéro de version de l'ensemble des nouveaux secrets.

Au cours de la première étape 1, si le numéro de version de l'ensemble des secrets du module cryptographique est égal au numéro distinctif permettant de déterminer que le module cryptographique est en cours de rechargement, cela signifie que l'opération de mise à jour n'a pas pu être achévée auparavant. Dans ce cas :
- au cours de l'étape 2, pour chaque secret, si le numéro de version dudit secret est différent du numéro de version du nouveau secret à charger, le nouveau secret correspondant est chargé ainsi que son numéro de version ;
- puis, au cours de l'étape 3, le numéro de version de l'ensemble des secrets du module cryptographique est rendu égal au numéro de version de l'ensemble des nouveaux secrets.

Toute interruption durant ces étapes peut être reprise de manière à poursuivre le rechargement à l'endroit interrompu, sur la même machine, ou sur une autre machine.

Le numéro de version de l'ensemble des secrets du module cryptographique sur la carte peut être stockée :
- soit dans un fichier de la carte accessible via un secret immuable ;
- soit sous la forme de la version d'un secret particulier, c'est-à-dire :
   o soit un secret qui ne sert qu'à donner la version globale des secrets ;
   o soit le dernier des secrets à recharger à l'étape où les secrets sont chargés dans un ordre immuable convenu.

En particulier, le procédé selon l'invention peut s'appliquer à un parc de cartes à puces qui peuvent avoir des numéros de version de secrets différents. Ce cas se présente notamment lorsque l'ensemble des cartes à puces correspond à un lot, et lorsque les secrets sont des clés d'accès aux données. Le procédé peut s'appliquer à un parc de terminaux sensibles dont les secrets de communication doivent être changés sur le terrain. Le procédé selon l'invention peut encore s'appliquer aux bases de données dont l'administration ne permet pas le changement des droits d'accès en une seule transaction.

Dans un mode de réalisation, la vérification du numéro de version de chaque secret (en particulier quand celle-ci n'est pas disponible ou n'est pas lisible) peut être faite par une authentification mutuelle des différents secrets jusqu'à trouver le point d'interruption.

## Revendications

1. Procédé de modification de secrets compris dans un module cryptographique, le module cryptographique :
• garantissant que le chargement d'un secret est soit abouti, soit non avenu ;
• permettant la lecture d'un numéro de version pour chaque secret ;
• comportant une information indiquant un numéro de version correspondant à l'ensemble des secrets ;
le procédé comportant :
• une première étape (1) au cours de laquelle, si le numéro de version de l'ensemble des secrets est égal à un numéro de version nécessitant le chargement d'un ensemble de nouveaux secrets, le numéro de version de l'ensemble des secrets du module cryptographique est rendu égal à un numéro distinctif permettant de déterminer que le module cryptographique est en cours de rechargement ;
• une deuxième étape (2), au cours de laquelle, pour chaque secret, si le numéro de version dudit secret diffère du numéro de version du nouveau secret correspondant à charger, le nouveau secret et son numéro de version sont chargés ;
• une troisième étape (3) au cours de laquelle le numéro de version de l'ensemble des secrets du module cryptographique est rendu égal au numéro de version de l'ensemble des nouveaux secrets.

2. Procédé selon la revendication 1 **caractérisé en ce que**, le module cryptographique étant une carte à puce, le numéro de version de l'ensemble des secrets du module cryptographique sur la carte est enregistré dans un fichier du module cryptographique de la carte accessible via un secret immuable.

3. Procédé selon la revendication 1 **caractérisé en ce que**, le module cryptographique étant une carte à puce, le numéro de version de l'ensemble des secrets du module cryptographique sur la carte est enregistré sous la forme d'un secret utilisé seulement pour indiquer la version globale des secrets.

4. Procédé selon la revendication 1 **caractérisé en ce que**, le module cryptographique étant une carte á puce, le numéro de version de l'ensemble des secrets du module cryptographique sur la carte est enregistré sous la forme du dernier des secrets à recharger à la deuxième étape (2).

5. Procédé selon l'une quelconque des revendications précédentes **caractérisé en ce que**, au cours de la deuxième étape (2), la vérification du numéro de version de chaque secret est réalisée par une authentification mutuelle des différents secrets jusqu'à trouver le point d'interruption.

## Claims

1. A process of modifying secrets included in a cryptographic module, the cryptographic module:
- ensuring that loading of the secret is either completed or has not happened;
- allowing a version number to be read for each secret;
- including information indicating a version number which corresponds to the set of secrets;
the process including:
- a first step (1), during which, if the version number of all of the secrets is equal to a version number requiring a new set of secrets to be loaded, the version number of the set of secrets in the cryptographic module is rendered equal to a distinctive number which allows the determination that the cryptographic module is being reloaded;
- a second step (2), during which, for each secret, if the version number of said secret differs from the version number of the new corresponding secret to be loaded, the new secret and its version number are loaded;
- a third step (3), during which the version number of the set of secrets of the cryptographic module is rendered equal to the version number of the set of new secrets.

2. The process according to claim 1, **characterised in that**, the cryptographic module being a chip card, the version number of the set of secrets in the cryptographic module on the card is recorded in a file in the cryptographic module of the card which is accessible via an invariable secret.

3. The process according to claim 1, **characterised in that**, the cryptographic module being a chip card, the version number of the set of secrets in the cryptographic module on the card is recorded in the form of a secret which is only used to indicate the overall version of the secrets.

4. The process according to claim 1, **characterised in that**, the cryptographic module being a chip card, the version number of the set of secrets in the cryptographic module on the card is recorded in the form of the last secret to be reloaded during the second step (2).

5. The process according to any one of the previous claims, **characterised in that**, during the second step (2), the verification of the version number of each secret is realised by mutual authentification of the different secrets until the interruption point is found.

## Patentansprüche

1. Verfahren zum Verändern von Geheimnissen, die in einem kryptografischen Modul enthalten sind, wobei das kryptografischen Modul:
- gewährleistet, dass das Laden eines Geheimnisses vollendet ist oder nicht begonnen hat;
- das Lesen einer Versionsnummer für jedes Geheimnis zulässt;
- eine Information enthält, die eine dem Geheimnissatz entsprechende Versionsnummer anzeigt;
wobei das Verfahren Folgendes beinhaltet:
- einen ersten Schritt (1), bei dem, wenn die Versionsnummer des Geheimnissatzes gleich einer Versionsnummer ist, die das Laden eines neuen Geheimnissatzes erfordert, die Versionsnummer des Geheimnissatzes des kryptografischen Moduls gleich einer Kennnummer gemacht wird, so dass festgestellt werden kann, wenn das kryptografische Modul gerade neu geladen wird;
- einen zweiten Schritt (2), bei dem für jedes Geheimnis, wenn sich die Versionsnummer des Geheimnisses von der Versionsnummer des neu zu ladenden entsprechenden Geheimnisses unterscheidet, das neue Geheimnis und seine Versionsnummer geladen werden;
- einen dritten Schritt (3), bei dem die Versionsnummer des Geheimnissatzes des kryptografischen Moduls gleich der Version des Satzes von neuen Geheimnissen gemacht wird.

2. Verfahren nach Anspruch 1, **dadurch gekennzeichnet, dass**, da das kryptografische Modul eine Chipkarte ist, die Versionsnummer des Geheimnissatzes des kryptografischen Moduls auf der Karte in einer Datei des kryptografischen Moduls der Karte gespeichert wird, die über ein unveränderliches Geheimnis zugängig ist.

3. Verfahren nach Anspruch 1, **dadurch gekennzeichnet, dass**, da das kryptografische Modul eine Chipkarte ist, die Versionsnummer des Geheimnissatzes des kryptografischen Moduls auf der Karte in Form eines Geheimnisses gespeichert wird, das nur benutzt wird, um die Gesamtversion der Geheimnisse anzuzeigen.

4. Verfahren nach Anspruch 1, **dadurch gekennzeichnet, dass**, da das kryptografische Modul eine Chipkarte ist, die Versionsnummer des Geheimnissatzes des kryptografischen Moduls auf der Karte in Form des letzten beim zweiten Schritt (2) neu zu ladenden Geheimnisses gespeichert wird.

5. Verfahren nach einem der vorherigen Ansprüche, **dadurch gekennzeichnet, dass** beim zweiten Schritt (2) die Verifikation der Versionsnummer jedes Geheimnisses durch gegenseitige Authentifizierung der verschiedenen Geheimnisse realisiert wird, bis der Unterbrechungspunkt gefunden ist.
